(19) Europäisches Patentamt
European Patent Office
Office européen des brevets

(11) Veröffentlichungsnummer: **0 100 017**
**B1**

(12) # EUROPÄISCHE PATENTSCHRIFT

(45) Veröffentlichungstag der Patentschrift: **27.12.89**

(51) Int. Cl.[4]: **G 11 B 5/702**

(21) Anmeldenummer: **83106772.3**

(22) Anmeldetag: **11.07.83**

(54) **Magnetische Aufzeichnungsträger.**

(30) Priorität: **21.07.82 DE 3227161**
**21.07.82 DE 3227163**

(43) Veröffentlichungstag der Anmeldung:
**08.02.84 Patentblatt 84/6**

(45) Bekanntmachung des Hinweises auf die Patenterteilung:
**27.12.89 Patentblatt 89/52**

(84) Benannte Vertragsstaaten:
**DE FR GB NL**

(56) Entgegenhaltungen:
**DE-A-2 920 015**
**DE-A-3 217 212**
**DE-A-3 226 011**
**DE-A-3 226 937**
**DE-B-2 753 694**

(73) Patentinhaber: **BASF Aktiengesellschaft, Carl-Bosch- Strasse 38, D-6700 Ludwigshafen (DE)**

(72) Erfinder: **Lehner, August, Wachenheimer Strasse 4, D-6701 Roedersheim- Gronau (DE)**
Erfinder: **Velic, Milan, Dr., Lisztstrasse 117, D-6700 Ludwigshafen (DE)**
Erfinder: **Kopke, Helmut, Goethestrasse 11, D-6714 Weisenheim (DE)**
Erfinder: **Balz, Werner, Dr., Kropsburgstrasse 44, D-6703 Limburgerhof (DE)**
Erfinder: **Lenz, Werner, Dr., Heinrich- Baermann-Strasse 14, D-6702 Bad Duerkheim (DE)**
Erfinder: **Baur, Reinhold, Dr., Strassburger Strasse 15a, D-7600 Offenburg (DE)**
Erfinder: **Melzer, Milena, Kirchenstrasse 16, D-6700 Ludwigshafen (DE)**

**EP 0 100 017 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft magnetische Aufzeichnungsträger aus einem nichtmagnetischen Trägermaterial, das mit einer Magnetschicht auf der Basis von in Bindemitteln dispergiertem, feinteiligem anisotropen magnetischen Material versehen ist und die in der Magnetschicht als Bindemittel ein Gemisch aus zwei organischen Polymeren enthalten.

Magnetische Aufzeichnungsträger sind zur Aufnahme und Wiedergabe von Ton, Bild und Daten in Anwendung. Die ständig steigenden Anforderungen, welche an diese Aufzeichnungsträger gestellt werden, machen weitere Verbesserungen in magnetischer und elektroakustischer Hinsicht nötig. So erfordert die Entwicklung in Richtung höherer Aufzeichnungsdichten bei allen genannten Anwendungsformen die Herstellung immer dünnerer Magnetschichten. Aus diesem Grunde muß sowohl die Packungsdichte des magnetischen Materials in der Magnetschicht, die remanente Magnetisierung in Aufzeichnungsrichtung, die gleichmäßige Verteilung des magnetischen Materials in der Schicht, sowie die Oberflächenglätte und die Gleichmäßigkeit der Schicht in hohem Maße verbessert werden, denn die originalgetreue Speicherung von Signalen stellt hohe Anforderungen an die Qualität einer Magnetschicht. Eine Magnetschicht muß sowohl hohe als auch tiefe Frequenzen amplitudengetreu speichern und wiedergeben können.

Um diese Eigenschaften zu erzielen, muß neben einer extrem gleichmäßigen Verteilung des magnetischen Pigmentes im organischen Bindemittel die Schicht in Aufzeichnungsrichtung magnetisch hochempfindlich sein. Dazu wird die Anisotropie der nadelförmigen Pigmentteilchen ausgenützt. Die flüssige Dispersion aus Magnetpulver und organischer Bindemittelösung wird nach der Beschichtung eines inerten Trägers einem Magnetfeld ausgesetzt, so daß die magnetisierbaren Nadeln in Aufzeichnungsrichtung gedreht werden. Durch den darauf unmittelbar folgenden Trockenvorgang wird die Lage der Teilchen im Bindemittelfilm festgelegt. Ein Maß für die erzielte magnetische Ausrichtung und damit auch für die Empfindlichkeit des Speichers ist das Verhältnis der remanenten Induktion $B_R$ zur Sättigungsinduktion $B_S$ der trockenen Magnetschicht, gemessen in Aufzeichnungsrichtung.

Die Verteilung des magnetischen Pigments im organischen Bindemittel und seine Ausrichtung im magnetischen Feld wird von der Natur des verwendeten Polymeren beeinflußt. Dies tritt besonders stark bei der Verwendung feinteiliger Pigmente in Erscheinung. Die Auswahl an organischen Bindemitteln und ihren Kombinationen für Magnetpulver ist groß. Bekannt ist z. B. die Verwendung von Polyacrylaten, Polyamiden, Polyestern, Polyurethanen, Phenoxyharzen, Mischpolymerisaten aus Vinylchlorid/Acrylnitril und Copolymerisaten aus Vinylchlorid, Vinylacetat und Vinylalkohol. Der größere Teil der aufgeführten Polymeren ist relativ hart und spröde. Die übliche mechanische Beanspruchung der Magnetschicht erfordert jedoch eine elastische, oftmals weichere Einstellung. Daher werden häufig Polyurethanelastomere mit relativ spröden Polymeren, wie Phenoxiharzen, Vinylchlorid-Vinylacetat-Copolymeren, Polycarbonat u.a. kombiniert oder aber Weichmacher in die Schicht eingebracht. Solche Polyurethane werden durch Umsetzung von hydroxylgruppenhaltigen Polyethern oder Polyestern mit Polyisocyanaten hergestellt. Üblicherweise werden Polyesterurethanelastomere, wie sie beispielsweise in der DE-AS-1 106 959 beschrieben sind, oder Polyetherurethanelastomere, wie sie in der US-A-2 899 411 beschrieben sind, eingesetzt. Zur Verbesserung der Laufeigenschaften werden die oben angeführten Polymermischungen häufig mit Polyisocyanaten vernetzt. Deshalb besitzen auch die mitverwendeten Hartharze häufig OH-Gruppen.

Nachteilig bei der Verwendung dieser Bindemittelsysteme ist jedoch der hohe Lösungsmittelbedarf, die lange Dispergierzeit und ebenso die nötige 2-Phasendispergierung. Außerdem wirken sich in diesen Bindemittelsystemen die besonderen Eigenschaften der magnetischen Materialien nur unbefriedigend aus. Dies zeigt sich durch einen niedrigen Richtfaktor, eine geringe Remanenz und damit durch eine geringe Höhen- und Tiefenempfindlichkeit sowie eine unbefriedigende Aussteuerbarkeit der resultierenden Aufzeichnungsträger.

In der DE-PS-814 225 werden bi- bzw. höherfunktionelle Polyoxyverbindungen, vorzugsweise Polyester, welche noch Hydroxylgruppen tragen, in Kombination mit Polyisocyanaten verwendet. Die dort genannten Stoffe sind an sich jedoch keine Filmbildner, sie stellen niedermolekulare Produkte dar, und neigen deshalb sehr lange zum Blocken, bevor sie ausreagiert sind.

Um die Nachteile von DE-C-814 225 auszugleichen, wird in der DE-AS-1 130 612 vorgeschlagen, zu dem Polyester-Polyisocyanat-Reaktionslack 5 - 25 % eines hochpolymeren physikalisch trocknenden Lackbindemittels zu mischen. Das Verfahren hat jedoch den Nachteil einer zusätzlichen Lackkomponente. Hierdurch wird der Herstellvorgang um einen Arbeitsschritt erweitert. Außerdem ist eine 2-Stufenmahlung notwendig, um optimale Eigenschaften zu erreichen. Die DE-AS-1 283 282 geht von der gleichen Überlegung aus wie die DE-AS-1 130 612, nur wird dort zum Polyester-Urethan-Reaktionslack Kautschuk zugesetzt.

In der DE-AS-1 571 128 besteht das Bindemittel aus 0 bis 75 Gewichtsprozent eines polymeren Matrizenmaterials, wo der Rest aus einem Elastomeren besteht. Als polymeres Matrizenmaterial wird mindestens ein Copolymeres einer Gruppe von löslichen hydroxylgruppenhaltigen Harzen mit einem Molekulargewicht von mindestens 2000 verwendet.

Bei der Auswahl der bisher bekannten Bindemittelsysteme bestand jeweils das Ziel, Nachteile und Mängel, wie lange Dispergierzeit, zweiphasige Dispergierung, schlechte Pigmentbenetzung, großer Lösungsmittelbedarf bei der Herstellung der Dispersion oder niedriger Richtfaktor, geringe Höhenempfindlichkeit, geringe Tiefenempfindlichkeit, schlechte Aussteuerbarkeit der Tiefen und Höhen und ungenügende Kopierdämpfung der Aufzeichnungsschichten zu beheben oder doch mindestens in dem einen oder anderen Fall günstig zu beeinflussen. Für eine Optimierung reichten die bisher vorgeschlagenen Lösungen nur ungenügend oder teilweise aus.

Es bestand daher die Aufgabe, magnetische Aufzeichnungsträger bereit zustellen, welche durch Verwendung geeigneter Bindemittel, die eine einphasige Dispergierung des magnetischen Materials und kurze Dispergierzeiten bei geringerem Lösungsmitteleinsatz erlauben, sich durch verbesserte elektronische Eigenschaften, insbesondere

hinsichtlich Empfindlichkeit und Aussteuerbarkeit sowohl bei hohen als auch bei tiefen Frequenzen, auszeichnen.

Es wurde nun gefunden, daß magnetische Aufzeichnungsträger mit einer auf einer nichtmagnetischen Trägerschicht aufgetragenen Magnetschicht aus einer Dispersion eines anisotropen magnetischen Materials in einem Gemisch aus zwei organischen Polymeren, den gestellten Anforderungen genügen, wenn das Bindemittelgemisch aus der Komponente 1, einem niedermolekularen OH-gruppenhaltigen Polyharnstoffurethan mit einer OH-Zahl zwischen 30 und 160 und einem Molekulargewicht (Zahlenmittel) zwischen 1 500 und 40 000, welches aus

1.IA 1 Mol eines Polydiols mit einem Molekulargewicht zwischen 400 und 4 000,
1.IB 0,2 bis 10 Mol eines Diols mit 2 bis 18 Kohlenstoffatomen,
1.IC 0,1 bis 4 Mol eines primären oder sekundären Aminoalkohols mit 2 bis 20 Kohlenstoffatomen und
1.II 1,20 bis 13 Mol eines Diisocyanats mit 6 bis 30 Kohlenstoffatomen, wobei der Anteil der NCO-Gruppen des Diisocyanats, bezogen auf die Komponenten 1.IA bis 1.IC, 65 bis 95 % der äquivalenten Menge an OH- und NH-Gruppen beträgt, hergestellt wird, mit der Maßgabe, daß ein unpigmentierter vernetzter Film aus dieser Komponente 1 eine Reißfestigkeit (nach DIN 53 455) größer als 15 $N/mm^2$, eine Reißdehnung (nach DIN 53 455) größer als 50 %, einen E-Modul (nach DIN 53 457) größer als 150 $N/mm^2$ und eine Pendelhärte (nach DIN 53 157) von 30 bis 140 s aufweist, und der Komponente 2, einem physikalisch trocknendem Bindemittel besteht und die beiden Komponenten mit Polyisocyanaten vernetzt werden.

In gleicher Weise eignen sich für den erfindungsgemäßen Zweck Bindemittelgemische, bei denen jedoch die Komponente 1 unter Einhaltung der oben angegebenen mechanischen Eigenschaften aus

1.IA 1 Mol eines Polydiols mit einem Molekulargewicht zwischen 400 und 4 000,
1.IB 0,2 bis 9 Mol eines Diols mit 2 bis 18 Kohlenstoffatomen,
1.IC 0,1 bis 4 Mol eines primären oder sekundären Aminoalkohols mit 2 bis 20 Kohlenstoffatomen,
1.ID 0,01 bis 1 Mol eines Triols mit 3 bis 18 Kohlenstoffatomen und
1.II 1,25 bis 13 Mol eines Diisocyanats mit 6 bis 30 Kohlenstoffatomen, wobei der Anteil der NCO-Gruppen des Diisocyanats, bezogen auf die Komponenten 1.IA bis 1.ID, 65 bis 95 % der äquivalenten Menge an OH- und NH-Gruppen beträgt, hergestellt wird.

Für das Bindemittelgemisch der erfindungsgemäßen magnetischen Aufzeichnungsträger ist als Komponente 2 ein hochmolekulares, thermoplastisches in Tetrahydrofuran lösliches lineares Polyurethan geeignet, welches aus

2.A 1 Mol eines Polyesterols mit einem Molekulargewicht zwischen 400 und 4 000,
2.B 0,3 bis 15 Mol eines geradkettigen aliphatischen Diols mit 2 bis 10 Kohlenstoffatomen,
2.C 0 bis 1,5 Mol eines Triols mit 3 bis 10 Kohlenstoffatomen und 1.25 bis 17 Mol eines Diisocyanats mit 6 bis 30 Kohlenstoffatomen, wobei die Menge an NCO-Gruppen etwa äquivalent der Menge an OH-Gruppen der Summe der Komponenten 2.A bis 2.C ist, hergestellt wird mit der Maßgabe, daß ein unpigmentierter Film aus dieser Komponente 2 eine Reißfestigkeit (nach DIN 53 455) zwischen 40 und 95 $N/mm^2$ und eine Reißdehnung (nach DIN 53 455) von 100 bis 1400 % aufweist, wobei das Mischungsverhältnis der Komponenten 1 und 2 9 : 1 bis 1 : 9 beträgt.

In ebenfalls vorteilhafter Weise lassen sich als Komponente 2 auch ein Polyvinylformalbindemittel mit einem Vinylformalgruppengehalt von mindestens 65 %, oder ein Copolymeres aus 50 bis 95 Gew.% Vinylchlorid und 5 bis 50 Gew.% eines Mono- oder Diesters eines aliphatischen Diols mit 2 bis 4 Kohlenstoffatomen mit Acrylsäure oder Methacrylsäure, oder ein Phenoxyharz, dessen Konstitution der Formel

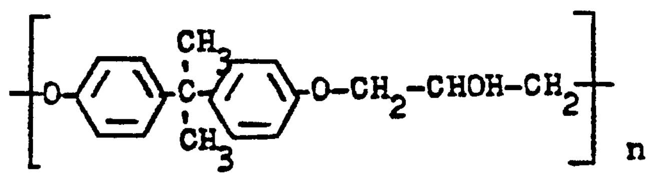

mit n annähernd gleich 100 entspricht, oder ein Di- und/oder Triester der Cellulose mit mindestens einer Carbonsäure mit 1 bis 4 Kohlenstoffatomen verwenden, wobei in diesen Fällen das Mischungsverhältnis der Komponenten 1 und 2 dann 1 : 0,8 bis 1 : 0,1 beträgt.

Die für die erfindungsgemäßen Aufzeichnungsträger geeigneten mit Polyisocyanaten vernetzten OH-gruppenhaltigen Polyharnstoffurethanbindemittel sind dadurch charakterisiert, daß sie als unpigmentierte Filme eine Reißfestigkeit (nach DIN 53 455) von größer 15, vorzugsweise größer 30 $N/mm^2$ eine Reißdehnung (nach DIN 53 455) von größer 50, vorzugsweise größer 70 % und einen E-Modul (nach DIN 53 157) von größer 150, vorzugsweise größer 200 $N/mm^2$, aufweisen und die Pendelhärte (nach DIN 53 157) zwischen 30 und 140, vorzugsweise 50 bis 110 sec., liegt. Die OH-Zahl der Komponente 1 beträgt 30 bis 160, vorzugsweise 40 bis 120. Das Molekulargewicht (Zahlenmittel) ist zwischen 1 500 und 40 000, entsprechend einem K-Wert zwischen 17 und 45, vorzugsweise zwischen 2 500 und 25 000, entsprechend einem K-Wert zwischen 19 und 35.

Beim Aufbau dieser Polymeren hat es sich als zweckmäßig erwiesen, daß die OH-Endgruppen zum Teil, vorzugsweise über 70 % und insbesondere zu mehr als 90 % aus folgenden Resten bestehen:

$-NH-CO-NR^1-R-OH$ oder

```
          R-OH
          |
-NH-CO-N
          |
          R-OH,
```

wobei $R = -(CH_2)-n$
$R^1 = H, -CH_3, -(CH_2)_nCH_3$ und
$n = 1$ bis 10
bedeuten.

In dieser Weise aufgebaute Polymere weisen gegenüber solchen ohne diese Endgruppen eine verringerte Thermoplastizität auf. Weiterhin besteht dadurch die Möglichkeit, den Gehalt an OH-Endgruppen zu erhöhen, wodurch sich bei der Vernetzung mit Polyisocyanat der Vernetzungsgrad, entsprechend den Anforderungen an die Magnetschicht, in weiten Grenzen variieren kann. Ebenfalls von Vorteil sind die Harnstoffgruppen, welche die Dispergierfähigkeit gegenüber den üblichen magnetischen Materialien erhöhen.

Zur Herstellung der Komponente 1 wird als Baustein 1.IA ein Polydiol mit einem Molekulargewicht von 400 bis 4000, bevorzugt von 700 bis 2 500, eingesetzt. Hierzu eignen sich die bekannten Polyesterole, Polyetherole, Polycarbonate und Polycaprolactame.

Die Polyesterole sind zweckmäßigerweise überwiegend lineare Polymere mit endständigen OH-Gruppen, bevorzugt solche mit 2 OH-Endgruppen. Die Säurezahl der Polyesterole ist kleiner als 10 und vorzugsweise kleiner als 3. Die Polyesterole lassen sich in einfacher-Weise durch Veresterung von aliphatischen Dicarbonsäuren mit 4 bis 12 C-Atomen, vorzugsweise 4 bis 6 C-Atomen, mit aliphatischen Glykolen, bevorzugt Glykolen mit 2 bis 12 C-Atomen oder durch Polymerisation von Lactonen mit 3 bis 6 C-Atomen herstellen. Als aliphatische Dicarbonsäuren lassen sich beispielsweise Glutarsäure, Pimelinsäure, Korksäure, Sebacinsäure, Dodecandisäure und vorzugsweise Adipinsäure und Bernsteinsäure einsetzen. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureester mit 1 bis 4 Kohlenstoffatomen im Alkoholrest, Carbonsäureanhydride oder Carbonsäurechloride zu verwenden. Beispiele für geeignete Glykole sind Diethylenglykol, Pentandiol, Decandiol-1,10 und 2,2,4-Trimethylpentandiol-1,5. Vorzugsweise verwendet werden Ethandiol-1,2, Butandiol-1,4, Hexandiol-1,6 und 2,2-Dimethylpropandiol-1,3. Je nach den gewünschten Eigenschaften der Polyurethane können die Polyole allein oder als Mischungen in verschiedenen Mengenverhältnissen verwendet werden. Als Lactone für die Herstellung der Polyesterole eignen sich α,α-Dimethyl-ß-propiolacton, γ-Butyrolacton und vorzugsweise ε-Caprolacton.

Die Polyetherole sind im wesentlichen lineare, endständige Hydroxylgruppen aufweisende Substanzen, die Etherbindungen enthalten und ein Molekulargewicht von etwa 600 bis 4 000, vorzugsweise von 1 000 bis 2 000, besitzen. Geeignete Polyetherole können leicht durch Polymerisation von cyclischen Ethern, wie Tetrahydrofuran oder durch Umsetzung von einem im Alkylenrest mit einem Startermolekül, das zwei aktive Wasserstoffatome gebunden enthält, hergestellt werden. Als Alkylenoxide seien beispielsweise genannt: Ethylenoxid, 1,2-Propylenoxid, Epichlorhydrin, 1,2- und 2,3-Butylenoxid. Die Alkylenoxide können einzeln, alternierend nacheinander oder als Mischungen verwendet werden. Als Startermoleküle kommen beispielsweise in Betracht: Wasser, Glykole, wie Ethylenglykol, Propylenglykol, Butandiol-1,4 und Hexandiol-1,6, Amine, wie Ethylendiamin, Hexamethylendiamin und 4,4'-Diamino-diphenylmethan und Aminoalkohole, wie Ethanolamin. Ebenso wie die Polyesterole können auch die Polyetherole allein oder in Mischungen verwendet werden.

Als Baustein 1.IB werden Diole mit 2 bis 18 Kohlenstoffatomen, vorzugsweise 2 bis 6 C-Atomen, eingesetzt, so zum Beispiel Ethandiol-1,2, Propandiol-1,3, Butandiol-1,4, Hexandiol-1,6, Pentandiol-1,5, Decandiol-1,10, 2-Methyl-1,3-propandiol, 2,2-Dimethyl-1,3-propandiol, 2,2-Dimethyl-1,4-butandiol, 2-Methyl-2-butyl-1,3-propandiol, Hydroxypivalinsäureneopentylglykolester, Diethylenglykol, Triethylenglykol und Methyldiethanolamin.

Im Rahmen der Herstellung der OH-gruppenhaltigen Polyharnstoffurethane hat es sich hinsichtlich besonderer Eigenschaften der erfindungsgemäßen Aufzeichnungsträger als zweckmäßig erwiesen, für die Bausteine 1.IB ganz oder teilweise Diamine mit 2 bis 15 Kohlenstoffatomen wie Ethylendiamin, 1,6-Hexamethylendiamin, 4,9-Dioxadodecan-1,12-diamin, 4,4'-Diaminodiphenylmethan oder Aminoalkohole wie z. B. Monoethanolamin, Monoisopropanol-4-Methyl-4-aminopentanol-2 einzusetzen.

In gleicher Weise können als Bausteine 1.IB die genannten Diole auch ganz oder teilweise durch Wasser oder die nachstehend auch als Bausteine 1.IC angeführten primären oder sekundären Aminoalkohole ersetzt werden.

Diese Aminoalkohole (Baustein 1.IC) mit 2 bis 20, vorzugsweise 3 bis 6 Kohlenstoffatomen, sind u.a. Monoethanolamin, Diethanolamin, Monoisopropanolamin, Diisopropanolamin, Methylisopropanolamin, Ethylisopropanolamin, Methylethanolamin, 3-Aminopropanol, 1-Ethylaminobutanol-2, 4-Methyl-4-aminopentanol-2, N-(2-Hydroxyethyl)anilin. Sekundäre Aminoalkohole sind besonders geeignet, da durch ihre Anlagerung am Kettenende die Löslichkeit der Polymeren verbessert wird. Als besonders günstig haben sich Methylethanolamin, Diethanolamin und Diisopropanolamin erwiesen.

Als Triole (Baustein 1.ID) werden Verbindungen mit 3 bis 18, vorzugsweise 3 bis 6 C-Atomen, angewandt. Beispiele für entsprechende Triole sind Glycerin, Trimethylolpropan und Hexantriol. Geeignet sind auch niedermolekulare Umsetzungsprodukte, z. B. aus Glycerin oder Trimethylolpropan mit Ethylenoxyd und/oder Propylenoxyd. Das Vorhandensein von Triolen bei der Polyaddition führt zu einer Verzweigung des Endproduktes, was sich, sofern keine örtliche Vernetzung auftritt, positiv auf die mechanischen Eigenschaften des Polyurethans auswirkt.

Zur Bildung der OH-gruppenhaltigen Polyharnstoffurethane werden die unter 1.1 genannten Bausteine mit aliphatischen, cycloaliphatischen oder aromatischen Diisocyanaten mit 6 bis 30 Kohlenstoffatomen (Baustein 1.II) umgesetzt. Zu diesem Zweck eignen sich besonders Verbindungen wie Toluylen-2,4-diisocyanat, Toluylen-2,6-diisocyanat, m-Phenylendiisocyanat, 4-Chlor-1,3-Phenylendiisocyanat, 1,5-Naphtylendiisocyanat, 1,6-Hexamethylendiisocyanat, 1,4-Cyclohexylendiisocyanat und 1,5-Tetrahydronaphtylendiisocyanat, Diphenylmethandiisocyanat, Dicyclohexylmethandiisocyanat oder Isophorondiisocyanat. Die OH-gruppenhaltigen Polyurethane auf Basis von Toluylendiisocyanat und Isophorondiisocyanat zeichnen sich durch ihre gute Löslichkeit in Tetrahydrofuran und Dioxan aus.

Das Verhältnis der Bausteine 1.I und 1.II zueinander kann von 1,20 bis 13 Mol Diisocyanat je Mol Polydiol bei Verwendung von 0,2 bis 10, vorzugsweise 0,5 bis 5 Mol des geradkettigen aliphatischen Diols mit 2 bis 18 C-Atomen und gegebenenfalls 0,01 bis 1 Mol, vorzugsweise 0,15 bis 0,5 Mol, Triol variiert werden, wobei die Menge des verwendeten geradkettigen Diols teilweise von dem Molekulargewicht des verwendeten Polydiols abhängt. Die Menge des angewandten Isocyanats sollte zu 5 bis 35 % im Unterschuß, bezogen auf die Mengen der NH- oder hydroxylhaltigen Verbindungen vorliegen, so daß am Ende der Reaktion praktisch kein freies, nicht umgesetztes Isocyanat, aber freie, nicht umgesetze Hydroxylgruppen verbleiben. Aus praktischen und lacktechnischen Gründen ist es jedoch häufig zweckmäßig, in einer Vorreaktion der Bausteine 1.IA, 1.IB, 1.IC und 1.II einen Diisocyanatüberschuß von 5 bis 40 %, bevorzugt 10 bis 30 %, bezogen auf die zur vollständigen Umsetzung der Reaktionsteilnehmer erforderliche Menge, zu verwenden, so daß das Verhältnis der Zahl der eingesetzten Hydroxylgruppen zur Zahl der Isocyanatgruppen in dieser Reaktionsstufe ungefähr 1 : 1,05 bis 1 : 1,4 vorzugsweise ungefähr 1 : 1,1 bis 1 : 1,30 beträgt. In der zweiten Reaktionsstufe wird dann eine dem NCO-Gehalt entsprechende NH-äquivalente Menge des Bausteins 1.IC, d.h. 0,1 bis 4, vorzugsweise 0,3 bis 2,5 Mol je Mol des Bausteins 1.IA, zugesetzt, bzw. das NCO-Präpolymere wird zum Aminoalkohol gegeben, so daß die Aminogruppen mit dem Isocyanat reagieren. Durch Variation der Aminoalkohole ergeben sich selbst bei Polyurethanen die keine Triole enthalten Polyurethane mit einer OH-Funktionalität zwischen 2 und 4, wobei die OH-Gruppen vorwiegend am Kettenende sind. Verwendet man Polyurethane, in die Triole eingebaut sind, so erhöht sich dadurch die OH-Funktionalität entsprechend. Dieser Aufbau ist für die Filmbildung und für die abschließende Vernetzung des OH-gruppenhaltigen Polyurethans mit dem Polyisocyanat von Vorteil. Wird in dieser zweiten Reaktionsstufe ein geringer Unterschuß an NH- bzw. $NH_2$-Gruppen gegenüber den NCO-Gruppen angeboten, dann wird ein Teil des Aminoalkohols in das Molekül eingebaut und ergibt je nach Aminoalkohol eine Verzweigungsstelle. Verwendet man einen Überschuß an NH-Gruppen, dann wird der Aminoalkohol erst bei der Vernetzungsreaktion völlig in den Polymerverband eingebaut. Damit ist es durch die Auswahl, d.h. durch Variation der Endgruppen, möglich, das Polymere den jeweiligen Anforderungen, wie die Fähigkeit zur Filmbildung und zur Dispergierung, anzupassen.

Die so aufgebauten thermoplastischen, elastischen OH-gruppenhaltigen Polyharnstoffurethane werden bevorzugt in Lösung nach dem 2-Stufenverfahren, gegebenenfalls in Gegenwart von Katalysatoren und anderen Hilfsmitteln und/oder Zusatzstoffen hergestellt. Diese Produkte nach dem lösungsmittelfreien Batch-Verfahren herzustellen, ist auch möglich. Da sich aber aufgrund der eventuellen Anwesenheit des Triols und der Reaktion von Amin mit NCO-Gruppen bei der Substanzpolyaddition zumindest teilweise Gel-Teilchen bilden, wird meist in Lösung gearbeitet. Allgemein wird bei der Lösungspolyaddition die Gefahr einer örtlichen Übervernetzung, wie sie bei der Substanzpolyaddition auftritt, vermieden.

Als Lösungsmittel für die Herstellung der Polyurethane werden vorzugsweise cyclische Ether, wie Tetrahydrofuran und Dioxan, und cyclische Ketone, wie Cyclohexanon, verwendet. Selbstverständlich können je nach Anwendungsgebiet die Polyurethane auch in anderen stark polaren Lösungsmitteln, wie Dimethylformamid, N-Methylpyrrolidon, Dimethylsulfoxid oder Ethylglykolacetat gelöst werden. Ebenso ist es möglich, die genannten Lösungsmittel mit Aromaten, wie Toluol oder Xylol und Estern, wie Ethyl- oder Butylacetat, zu mischen.

Als geeignete Katalysatoren zur Herstellung der Polyurethane und für die Vernetzungsreaktion seien beispielhaft genannt: tert. Amine, wie Triethylamin, Triethylendiamin, N-Methyl-pyridin und N-Methyl-morpholin, Metallsalze, wie Zinnoctoat, Bleioctoat und Zinkstearat und organische Metallverbindungen, wie Dibutylzinndilaurat. Die geeignete Katalysatormenge ist abhängig von der Wirksamkeit des in Frage kommenden Katalysators. Im allgemeinen hat es sich als zweckmäßig erwiesen, 0,005 bis 0,3 Gewichtsteile, vorzugsweise 0,01 bis 0,1 Gewichtsteile für jeweils 100 Gewichtsteile Polyurethan zu verwenden.

Beim 2-Stufenpolyadditionsverfahren wird das Diisocyanat vorgelegt, dann werden die Bausteine 1.IA, 1.IB und 1.ID und gegebenenfalls der Katalysator und die Hilfs- und Zusatzstoffe in Lösungsmittel bei Temperaturen von 20 bis 90°C; vorzugsweise 30 bis 70°C, in 0,5 bis 5 Stunden zugegeben. Die Komponenten werden bis zum gewünschten NCO-Gehalt umgesetzt, dann wird in der 2. Stufe der Baustein 1.IC zugesetzt oder der Baustein 1.IC wird vorgelegt und das Polymere zugegeben. Beim 2-Stufenverfahren wird in der ersten Stufe mit einem NCO-Überschuß, gegenüber den Bausteinen 1.IA, 1.IB und 1.ID, gearbeitet.

Die im Bindemittelgemisch für die erfindungsgemäßen Aufzeichnungsträger als Komponente 2 enthaltenen physikalisch trocknenden Bindemittel sind bekannt. Die im erfindungsgemäßen Aufzeichnungsträger als Komponente 2 enthaltenen Polyurethanelastomeren werden ebenso wie ihre Herstellung u. a. in den DE-ASen-2 445 763 und 2 753 694 beschrieben.

Die als hochmolekulare Bindemittel in den Magnetschichten verwendeten Polyurethane sind dann besonders geeignet, wenn sie einen H-Wert zwischen 50 und 70 und einen Blockpunkt von mindestens 120°C aufweisen, die Reißdehnung zwischen 100 und 1 400 % (DIN 53 455) und die Reißfestigkeit zwischen 40 und 95 $N/mm^2$ (DIN 53 455) liegt. Besitzen diese Polyurethane außerdem noch OH-Endgruppen, die einer Vernetzung leicht zugänglich sind, ist dies von besonderem Vorteil.

Das Verhältnis dieser Komponenten 1 und 2 des für die erfindungsgemäßen Aufzeichnungsträgern eingesetzten Polyurethanbindemittelgemisches beträgt 9 : 1 bis 1 : 9, bevorzugt 2 : 8 bis 8 : 2.

Weiterhin eignet sich in vorteilhafter Weise als Komponente 2 des Bindemittelgemisches für die erfindungsgemäßen magnetischen Aufzeichnungsträger ein Polyvinylformal-Bindemittel, welches durch Hydrolyse eines Polymerisats eines Vinylesters und anschließende Umsetzung des Vinylalkohol-Polymeren mit Formaldehyd hergestellt wurde. Die Polyvinylformale haben zweckmäßigerweise einen Vinylformalgruppengehalt von mindestens 65 Gew. % und insbesondere mindestens 80 Gew. %. Geeignete Polyvinylformale haben einen Gehalt an Vinylalkohol-Gruppen von 5 bis 13 Gew. %, einen Gehalt an Vinylformal-Gruppen von 80 bis 88 Gew. %, ein spezifisches Gewicht von ca. 1,2 und eine Viskosität von 50 bis 120 Centipoise gemessen bei 20°C mit einer Lösung von 5 g Polyvinylformal in 100 ml Phenol-Toluol (1 : 1). In gleicher Weise geeignet sind neben dem Polyvinylformal Vinylchlorid-Diol-mono- oder -di(meth)acrylat-Copolymerisate, die sich z. B. in an sich bekannter Weise durch Lösungscopolymerisation oder Suspensionscopolymerisation von Vinylchlorid und dem Diol-monomethacrylat oder -monoacrylat herstellen lassen. Das hierfür zum Einsatz gelangende Diolmono- oder -di-acrylat oder -methacrylat ist ein Veresterungsprodukt von Acrylsäure oder Methacrylsäure mit der entsprechenden molaren Menge an aliphatischem Diol mit 2 bis 4 C-Atomen, wie Ethylenglykol, 1,4-Butandiol und bevorzugt Propandiol, wobei das Propandiol vorzugsweise aus 1,3-Propandiol und 0 bis 50 Gew. % 1,2-Propandiol besteht. Die Copolymerisate haben zweckmäßigerweise einen Vinylchloridgehalt von 50 bis 95 Gew. % und einem Diolacrylat- oder -methacrylat-Gehalt von 5 bis 50 Gew. %. Besonders geeignete Copolymerisate besitzen vorzugsweise einen Gehalt von 70 bis 90 Gew. % Vinylchlorid und 10 bis 30 Gew. % Diolmonoacrylat bzw. Diolmonomethacrylat. Eine 15-%-ige Lösung besonders geeigneter Copolymerisate wie der Vinylchlorid-Propandiolmonoacrylat-Copolymerisate in einem Gemisch aus gleichen Volumenteilen von Tetrahydrofuran und Dioxan weist bei 25°C eine Viskosität von etwa 30 cP auf. Der K-Werte nach H. Fikentscher (Cellulosechemie *30* (1931), S. 58 ff.) der besonders geeigneten Produkte liegt zwischen 30 und 50, vorzugsweise bei etwa 40.

Außerdem lassen sich als Komponente 2 vorteilhaft Phenoxyharze, deren Konstitution mit der wiederkehrenden Formel

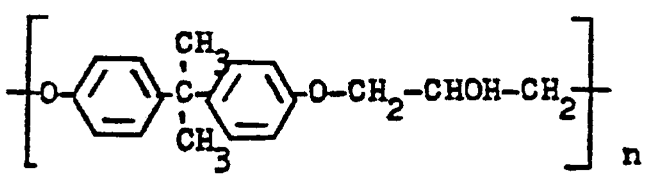

in der n annähernd gleich 100 ist, zu beschreiben ist, einsetzen. Es handelt sich hierbei um Polymere, wie sie in der DE-AS-1 295 011 beschrieben sind und wie sie unter den Handelsbezeichnungen ®Epikote der Firma Shell Chemical Co. oder unter der Bezeichnung ®Epoxidharz PKHH der Union Carbide Corporation bekannt sind.

Ebenso eignet sich Celluloseester-Bindemimttel zur Verwendung als Komponente 2 in dem bezeichneten Bindemittelgemisch. Dies sind Veresterungsprodukte der Cellulose mit Carbonsäuren mit 1 bis 4 Kohlenstoffatomen, wie z. B. Celluloseacetat, Cellulosetriacetat, Celluloseacetopropionat, Celluloseacetobutyrat.

Das Verhältnis der Komponenten 1 und der letztgenannten Komponente 2 des für die erfindungsgemäßen Aufzeichnungsträger eingesetzten Bindemittelgemisches beträgt 1 : 0,8 bis 1 : 0,1, bevorzugt 1 : 0,6 bis 1 : 0,2.

Die gute Verträglichkeit der Bindemittel untereinander ermöglicht es je nach Eigenschaftsprofil und Anforderungen, die an die Magnetschicht gestellt werden, die Komponenten in weiten Grenzen zu variieren. Je nach Bindemittelanforderung kann dabei von einer nach der Vernetzung sehr elastischen Komponente 1 und einer harten Komponente 2 oder von einer nach der Vernetzung harten Komponente 1 und einer weichen Komponente 2 ausgegangen werden. Besonders bevorzugt sind Abmischungen, in denen die Komponente 1 mit mindestens 50 % enthalten ist.

Die weitere Verarbeitung des aus den Komponenten 1 und 2 bestehenden Bindemittelgemisches mit magnetischen Materialien und Hilfsstoffen zu den erfindungsgemäßen magnetischen Aufzeichnungsträgern erfolgt in an sich bekannter Weise.

Als anisotrope magnetische Materialien können die an sich bekannten verwendet werden, die die Eigenschaften der resultierenden Magnetschichten wesentlich beeinflussen, wie zum Beispiel Gamma-Eisen(III)-oxid, feinteiliger Magnetit, ferromagnetisches undotiertes oder dotiertes Chromdioxid oder kobaltmodifiziertes Gamma-Eisen (III)-oxid.

Bevorzugt sind nadelförmiges Gamma-Eisen(III)-oxid sowie ferromagnetisches Chromdioxid. Die Teilchengröße beträgt im allgemeinen 0,2 bis 2 µm, bevorzugt ist der Bereich von 0,3 bis 0,8 µm.

In an sich bekannter Weise können die Magnetschichten ferner in kleinen Mengen Zusätze wie Dispergiermittel und/oder Gleitmittel, aber auch Füllstoffe enthalten, die bei der Dispergierung der Magnetpigmente oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin sowie Fettsäureester oder Wachse, Siliconöle, Ruß usw. Die Menge der Zusätze ist die an sich übliche, sie liegt im allgemeinen unter 10 Gewichtsprozent, bezogen auf die Magnetschicht.

Das Mengenverhältnis von magnetischem Material zu Bindemittel in den erfindungsgemäßen Aufzeichnungsmaterialien liegt zwischen 1 bis 10 und insbesondere 3 bis 6 Gewichtsteilen magnetisches Material auf ein Gewichtsteil des Bindemittelgemisches. Es ist ein besonderer Vorteil, daß aufgrund des vorzüglichen Pigmentbindevermögens der speziellen Polyurethane hohe Magnetmaterialkonzentrationen in den Magnetschichten möglich sind, ohne daß die mechanisch-elastischen Eigenschaften verschlechtert oder die Anwendungseigenschaften merklich in Mitleidenschaft gezogen werden.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im allgemeinen in Stärken von 4 bis 200 µm und insbesondere von 10 bis 36 µm. In neuerer Zeit ist auch die Anwendung von Magnetschichten auf Papierträgern für Zwecke der mittleren Datentechnik bedeutend geworden; auch hierfür lassen sich die erfindungsgemäßen Beschichtungsmassen vorteilhaft verwenden.

Die Herstellung der erfindungsgemäßen magnetischen Aufzeichnungsträger kann in bekannter Weise erfolgen. Zweckmäßig wird die in einer Dispergiermaschine, z. B. einer Topfkugelmühle oder einer Rührwerksmühle, aus dem magnetischen Material und einer Lösung der Bindemittel unter Zusatz von Dispergiermitteln und anderen Zusätzen hergestellte Magnetpigmentdispersion nach dem Zumischen des Polyisocyanatvernetzers filtriert und mit der üblichen Beschichtungsmaschine, z. B. mittels eines Linealgießers, auf den nichtmagnetischen Träger aufgetragen. In der Regel erfolgt eine magnetische Ausrichtung, bevor die flüssige Beschichtungsmischung auf dem Träger getrocknet wird; letzteres geschieht zweckmäßigerweise in 2 bis 5 Minuten bei Temperaturen von 50 bis 90°C. Die Magnetschichten können auf üblichen Maschinen mittels Hindurchführen zwischen geheizten und polierten Walzen, gegebenenfalls bei Anwendung von Druck und Temperaturen von 25 bis 100°C, vorzugsweise 60 bis 80°C, geglättet und verdichtet werden. Die Dicke der Magnetschicht beträgt im allgemeinen 2 bis 20 µm, vorzugsweise 4 bis 10 µm. Im Falle der Herstellung von Magnetbändern werden die beschichteten Folien in der Längsrichtung in den üblichen, meist nach Zoll festgelegten Breiten geschnitten.

Wesentlich für die vorteilhaften Eigenschaften der erfindungsgemäßen magnetischen Aufzeichnungsträger ist die Vernetzung der beiden Komponenten des Polyurethanbindemittelgemisches mit Polyisocyanaten. Für die Vernetzung kann eine Vielzahl organischer Di-, Tri- oder Polyisocyanate oder Isocyanatprepolymere bis zu einem Molgewicht von 10 000, vorzugsweise zwischen 500 und 3 000, verwendet werden. Bevorzugt sind Polyisocyanate, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- und Triole oder durch Biuret- und Isocyanuratbildung entstehen, erwiesen. Besonders günstig ist ein Additionsprodukt von Toluylendiisocyanat an Trimethylolpropan und Diethylenglykol.

Die Menge an zugesetzter Polyisocyanatkomponente entspricht, bezogen auf die OH-Gruppen der zu vernetzenden Polyurethanbindemittel, einem OH : NCO-Verhältnis von 1 : 0,3 bis 1 : 2,0, vorzugsweise von 1 : 0,5 bis 1 : 1,5.

Die erfindungsgemäßen magnetischen Aufzeichnungsträger weisen gegenüber solchen, welche mit dem Stand der Technik entsprechenden Polyurethanen bzw. Polyurethanmischungen als Bindemittel hergestellt sind, verbesserte elektroakustische Eigenschaften, insbesondere hinsichtlich der Höhen- und Tiefenaussteuerbarkeit als auch der Empfindlichkeit, auf. Bezüglich der Videoanwendung zeichnen sich die erfindungsgemäßen Aufzeichnungsträger durch verbesserten Video und Farbstörabstand sowie durch eine geringere Fehlerzahl aus. Außerdem ist wesentlich, daß sich damit die bekannten magnetischen Materialien in üblichen Dispergiereinrichtungen leicht und vor allem mit sehr geringem Zeit- und Energieaufwand zu homogenen hochpigmentierten Dispersionen verarbeiten lassen. Hervorzuheben ist weiterhin der bis zu 40 % geringere Lösungsmittelbedarf beim Dispergierprozeß. Damit können mit Hilfe des mit Polyisocyanat vernetzten Polyurethanbindemittelgemisches in vereinfachter und verkürzter Arbeitsweise magnetisch und damit auch elektroakustisch wesentlich verbesserte magnetische Aufzeichnungsträger erhalten werden.

Die in den nachstehenden Beispielen und Vergleichsversuchen genannten Teile und Prozente beziehen sich, soweit nicht anders angegeben, auf das Gewicht. Volumenteile verhalten sich zu Gewichtsteilen wie Liter zu Kilogramm.

**Beispiel A**

100,05 g Toluylendiisocyanat, gelöst in 107 g Tetrahydrofuran wurden auf 60°C erhitzt und mit einem Tropfen Dibutylzinndilaurat versetzt. Dazu wurden innerhalb von 2 1/2 Stunden 150 g eines OH-gruppenhaltigen Polyesters aus Adipinsäure und Butandiol-1,4 mit einem Molekulargewicht von 1 000 und 41,3 g Hexandiol gelöst in 200 g Tetrahydrofuran gegeben. Nach einer Stunde wurde nochmals ein Tropfen Dibutylzinndilaurat zugegeben. Nach Erreichen eines NCO-Gehaltes von 1,05 % wurde auf 45°C abgekühlt und danach 15,75 g Diethanolamin zugesetzt. Das resultierende Produkt wies einen Feststoffgehalt von 50 %, eine OH-Zahl von 55 und einen H-Wert von 24 bis 28 auf.

**Beispiel 1**

In einer Stahlkugelmühle mit einem Füllvolumen von 100 000 Volumenteilen wurden 100 000 Teile Stahlkugeln, 5 040 Teile der in Beispiel A angegebenen 50-%-igen Lösung des Polyharnstoffurethans, 8 640 Teile einer 12,5-%-igen Lösung eines gemäß DE-AS-2 753 694 hergestellten Polyesterurethan in Tetrahydrofuran, 200 Teile Dispergierhilfsmittel, 166 Teile Gleitmittel, 16 000 Teile eines ferromagnetischen Chromdioxidpigments mit einer mittleren Teilchengröße von 0,5 µm und einer Koerzitivkraft von 50 kA/m und 18 000 Teile Tetrahydrofuran eingefüllt und etwa 24 Stunden dispergiert. Die Magnetdispersion wurde sodann unter Druck durch einen Filter von 5 µm Porenweite filtriert und unmittelbar vor dem nachfolgenden Auftragen auf eine 15 µm starke Polyethylenterephthalatfolie unter Rühren mit 1 140 Teile einer 75-%.-igen Lösung aus Triisocyanat und 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 60 und 90°C getrocknet. Durch Hindurchführen zwischen beheizten Walzen (60°C, Liniendruck 2 000 N/cm) wurde die Magnetschicht verdichtet und geglättet. Die Dicke der Magnetschicht beträgt etwa 4 µm. Die beschichtete Folie wurde anschließend in 12,65 mm breite Bänder geschnitten.

An diesem für den Videobereich vorgesehenen magnetischen Aufzeichnungsträgern wurden auf einem VHS-Recorder der Firma Victor Company of Japan gegen das Bezugsband (odB) folgende Messungen durchgeführt:

(1) Videstörabstand (Video SN): Verhältnis des Luminanzsignals eines 100 % Weißbildes zum Rauschpegel, gemessen mit dem Störspannungsmesser UPSF der Firma Rohde und Schwarz (>100 kHz).

(2) Farbstörabstand (Farb SN): Verhältnis des Farbsignals einer Rotfläche zum Rauschpegel, gemessen mit dem Störspannungsmesser UPSF der Firma Rhode und Schwarz (100 kHz - 3 MHz).

(3) Fehlerzahl: Anzahl der Pegeleinbrüche von 20 dB mit einer Dauer von mehr als 15 µsec pro Minute.

Die Meßergebnisse sind in der Tabelle 1 angegeben.

**Vergleichsversuch**

Es wurde wie in Beispiel 1 beschrieben, verfahren, jedoch wurde anstelle des Polyharnstoffurethans nach Beispiel A ein gemäß DE-AS-2 753 694 hergestelltes Polyesterurethan in Tetrahydrofuran eingesetzt. Die Verarbeitung erfolgte wie in Beispiel 1 beschrieben. Die Prüfergebnisse sind in Tabelle 1 angegeben.

**Tabelle 1**

| | Video S/N [dB] | Farb S/N [dB] | Fehlerzahl [1/min] |
|---|---|---|---|
| Beispiel 1 | 1 | 1 | 12 |
| Vergleichsversuch | 0 | 0 | 30 |

**Beispiel B**

108,75 Toluylendiisocyanat, gelöst in 108 g Tetrahydrofuran wurden auf 60°C erhitzt und mit einem Tropfen Dibutylzinndilaurat versetzt. Dazu wurden innerhalb von 2 1/2 Stunden 150 g eines OH-gruppenhaltigen Polyesters aus Adipinsäure und Butandiol-1,4 mit einem Molekulargewicht von 1 000 und 18,6 g Ethylenglykol und 4,47 g Trimethylolpropan, gelöst in 200 g Tetrahydrofuran gegeben. Nach einer Stunde wurde nochmals ein Tropfen Dibutylzinndilaurat zugegeben. Nach Erreichen eines NCO-Gehaltes von 1,78 % wurde auf 45°C abgekühlt und danach 20,25 g Diethanolamin zugesetzt. Das resultierende Produkt wies einen Feststoffgehalt von 50 %, eine OH-Zahl von 91 und einen K-Wert von 24 auf.

**Beispiel 2**

In eine Stahlkugelmühle mit einem Inhalt von 600 Volumenteilen, gefüllt mit 600 kg Stahlkugeln mit einem Durchmesser zwischen 4 und 6 mm, wurden 102 kg Tetrahydrofuran, 26,3 kg einer 50-%-igen Lösung des Polyharnstoffurethans gemäß Beispiel B, 27,8 kg einer Polyesterurethanlösung, hergestellt nach DE-AS-2 753 694, 100 kg eines ferromagnetischen Chromdioxids mit einer mittleren Nadellänge von 0,5 µm, 2,5 kg Zinkoleat, 0,25 kg eines handelsüblichen Siliconöls sowie 1 kg n-Butylstearat eingefüllt und der Ansatz 36 Stunden dispergiert. Die Dispersion wurde dann unter

Druck filtriert und unmittelbar vor dem Auftragen auf eine 15 µm dicke Polyethylenterephthalatfolie unter Rühren mit, bezogen auf einen Teil Dispersion, 0,039 Teilen einer 75-%-igen Lösung eines Triisocyanats aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 50 und 80°C getrocknet und durch Hindurchführen zwischen beheizten Walzen unter Druck (60°C, Liniendruck 2 000 N/cm) geglättet.

Die Messung der magnetischen Eigenschaften wurde in einem Meßfeld von 160 kA/m durchgeführt. Nach dem Schneiden von 3,81 mm breiten Bändern wurden die elektroakustischen Werte gemäß DIN 45 401, 45 403 und 45 512 (Blatt 12) gegen das Bezugsband C 401 R geprüft. Die Meßergebnisse sind in Tabelle 2 angegeben.

**Tabelle 2**

| | Beispiel 2 |
|---|---|
| Schichtdicke [µm] | 4,9 |
| remanente Magnetisierung [mT] | 176 |
| Richtfaktor | 3,1 |
| Tiefenempfindlichkeit $E_T$ 315 Hz [ΔdB] | 1,2 |
| Höhenempfindlichkeit $E_H$10 kHz " | 2,6 |
| Tiefenaussteuerbarkeit $A_T$ 315 Hz " | 3,2 |
| Höhenaussteuerbarkeit $A_H$ 10 kHz " | 2,1 |

**Beispiel 3**

In einer Stahlkugelmühle mit einem Füllvolumen von 100 000 Volumenteilen wurden 100 000 Teile Stahlkugeln, 5 760 Teile der in Beispiel A angegebenen 50-%-igen Lösung des Polyharnstoffurethans, 3 600 Teile einer 20-%-igen Lösung eines Phenoxyharzes, hergestellt aus Epichlorhydrin und Bisphenol A, 200 Teile Dispergieilfsmittel, 166 Teile Gleitmittel, 16 000 Teile eines ferromagnetischen Chromdipigments mit einer mittleren Teilchengröße von 0,5 µm und einer Koerzitivkraft von 50 kA/m und 18 000 Teile Tetrahydrofuran eingefüllt und etwa 24 Stunden dispergiert. Die Magnetdispersion wurde sodann unter Druck durch einen Filter von 5 µm Porenweite filtriert und unmittelbar vor dem nachfolgenden Auftragen auf eine 15 µm starke Polyethylenterephthalatfolie unter Rühren mit 1 140 Teilen einer 75-%-igen Lösung von Triisocyanat aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 60 und 90°C getrocknet. Durch Hindurchführen zwischen beheizten Walzen (60°C, Liniendruck 2 000 N/c) wurde die Magnetschicht verdichtet und geglättet. Die Dicke der Magnetschicht beträgt 4 µm. Die beschichtete Folie wurde anschließend in 12,6 mm breite Bänder geschnitten.

Die Messungen der Videoeigenschaften erfolgte wie in Beispiel 1 beschrieben. Die Meßergebnisse sind in der Tabelle 3 angegeben.

**Vergleichsversuch**

Es wurde wie in Beispiel 3 beschrieben verfahren, jedoch wurde anstelle des Polyharnstoffurethans gemäß Beispiel A ein gemäß DE-AS-1 295 011 nach dem Schmelzkondensationsverfahren hergestelltes Polyesterurethan in Tetrahydrofuran und 1 Teil eines Phenoxyharzes, wie in Beispiel 1, verwendet, eingesetzt. Die Verarbeitung erfolgte wie in Beispiel 3 beschrieben. Die Prüfergebnisse sind in Tabelle 3 angegeben.

**Tabelle 3**

| | Video S/N [dB] | Farb S/N [dB] | Fehlerzahl [1/min] |
|---|---|---|---|
| Beispiel 3 | 1 | 2 | 10 |
| Vergleichsversuch | 0 | 0 | 30 |

**Beispiel 4**

In eine Stahlkugelmühle mit einem Inhalt von 600 Volumenteilen, gefüllt mit 600 kg Stahlkugeln mit einem Durchmesser zwischen 4 und 6 mm, wurden 102 kg Tetrahydrofuran, 26,3 kg einer 50-%-igen Lösung des Polyharnstoffurethans gemäß Beispiel B, 28 kg einer 20-%-igen Lösung eines Phenoxyharzes, hergestellt aus Epichlorhydrin und Bisphenol A, 100 kg eines ferromagnetischen Chromdioxids mit einer mittleren Nadellänge von 0,5 µm, 2,5 kg Zinkoleat, 0,25 kg eines handelsüblichen Siliconöls sowie 1 kg n-Butylstearat eingefüllt und der Ansatz 36 Stunden dispergiert. Die Dispersion wurde dann unter Druck filtriert und unmittelbar vor dem Auftragen auf eine 15 µm dicke Polyethylenterephthalatfolie unter Rühren mit, bezogen auf ein Teil Dispersion, 0,039 Teilen einer 75-%-igen Lösung eines Triisocyanats aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 50 und 80°C getrocknet und durch Hindurchführen zwischen beheizten Walzen unter Druck (60°C, Liniendruck 200°C N/cm) geglättet.

Die Messung der magnetischen Eigenschaften wurde in einem Meßfeld von 160 kA/m durchgeführt.

Nach dem Schneiden von 3,81 mm breiten Bändern wurden die elektroakustischen Werte gemäß DIN 45 401, 45 403 und 45 512 (Blatt 12) gegen das Bezugsband C401R geprüft. Die Meßergebnisse sind in der Tabelle 4 angegeben.

**Beispiel 5**

Es wurde wie in Beispiel 4 beschrieben verfahren, jedoch wurde das Phenoxyharz durch ein Polyvinylformal, bestehend aus 82 % Vinylformal-, 12 % Vinylacetat- und 6 % Vinylalkoholeinheiten, ersetzt. Die Meßergebnisse sind in der Tabelle 4 angegeben.

**Beispiel C**

53,1 g Toluylendiisocyanat und 75 g Diphenylmethyldiisocyanat, gelöst in 229 g Tetrahydrofuran wurden auf 60°C erhitzt und mit einem Tropfen Dibutylzinndilaurat versetzt. Dazu wurden innerhalb von 2,5 Stunden 250 g eines OH-gruppenhaltigen Polyesters aus Adipinsäure und Butandiol-1,4 mit einem Molkulargewicht von 1 000, 27,7 g Hexandiol und 1,34 g Trimethylolpropan, gelöst in 200 g Tetrahydrofuran, gegeben. Nach einer Stunde wurde nochmals ein Tropfen Dibutylzinndilaurat zugegeben. Nach Erreichen eines NCO-Gehaltes von 1,05 % wurde auf 450°C abgekühlt und danach 22,05 g Diethanolamin zugesetzt. Das resultierende Produkt wies einen Feststoffgehalt von 50 %, eine OH-Zahl von 55 und einen K-Wert von 30 auf.

**Beispiel 6**

Es wurde wie in Beispiel 4 beschrieben verfahren, jedoch wurde als Bindemittel ein Gemisch aus 26,3 kg einer 50-%-igen Lösung des Polyharnstoffurethans gemäß Beispiel C und 7,5 kg einer 20-%-igen Lösung eines Celluloseacetobutyrats (CA-381-2 der Firma Eastman Kodak, Rochester) eingesetzt.

Die Meßergebnisse sind in der Tabelle 4 angegeben.

**Tabelle 4**

| | Beisp. 4 | Beisp. 5 | Beisp. 6 |
|---|---|---|---|
| Schichtdicke [µm] | 5,3 | 5,0 | 4,9 |
| remanente Magnetisierung [mT] | 164 | 168 | 172 |
| Richtfaktor | 3,1 | 3,0 | 3,0 |
| Tiefenempfindlichkeit $E_T$ 315 Hz [ΔdB] | 0,8 | 1,0 | 1,2 |
| Höhenempfindlichkeit $E_H$ 10 kHz [ΔdB] | 2,0 | 2,2 | 2,0 |
| Tiefenaussteuerbarkeit $A_T$315 Hz [ΔdB] | 2,1 | 2,3 | 2,6 |
| Höhenaussteuerbarkeit $A_H$10 kHz [ΔdB] | 1,6 | 1,8 | 2,2 |

**Patentansprüche**

1. Magnetischer Aufzeichnungsträger, bestehend aus einem nichtmagnetischen Trägermaterial und einer Magnetschicht, erhalten durch schichtförmiges Auftragen einer Dispersion eines anisotropen magnetischen Materials in der Lösung eines Gemisches aus zwei organischen Polymeren und Zusatzstoffen auf das Trägermaterial, Vernetzen der beiden Polymeren mit Polyisocyanat und Trocknen der Schicht, *dadurch gekennzeichnet,* daß das Bindemittelgemisch aus der Komponente 1, einem niedermolekularen OH-gruppenhaltigen Polyharnstoffurethan mit einer OH-Zahl zwischen 30 und 160 und einem Molekulargewicht (Zahlenmittel) zwischen 1 500 und 40 000, welches aus

1.IA 1 Mol eines Polydiols mit einem Molekulargewicht zwischen 400 und 4 000,
1.IB 0,2 bis 10 Mol eines Diols mit 2 bis 18 Kohlenstoffatomen,
1.IC 0,1 bis 4 Mol eines primären oder sekundären Aminoalkohols mit 2 bis 20 Kohlenstoffatomen und
1.II 1,20 bis 13 Mol eines Diisocyanats mit 6 bis 30 Kohlenstoffatomen, wobei der Anteil der NCO-Gruppen des Diisocyanats, bezogen auf die Komponenten 1.IA bis 1.IC, 65 bis 95 % der äquivalenten Menge an OH- und NH-Gruppen beträgt,

hergestellt wird, mit der Maßgabe, daß ein unpigmentierter mit Polyisocyanat vernetzter Film aus dieser Komponente 1

eine Reißfestigkeit (nach DIN 53 455) größer als 15 N/mm$^2$ eine Reißdehnung (nach DIN 53 455) größer als 50 %, einen E-Modul (nach DIN 53 457) größer als 150 N/mm$^2$ und eine Pendelhärte (nach DIN 53 157) von 30 bis 140 s aufweist, und der Komponente 2, einem physikalisch trocknendem Bindemittel besteht.

2. Magnetischer Aufzeichnungsträger bestehend aus einem nichtmagnetischen Trägermaterial und einer Magnetschicht, erhalten durch schichtförmiges Auftragen einer Dispersion eines anisotropen magnetischen Materials in der Lösung eines Gemisches aus zwei organischen Polymeren und Zusatzstoffen auf das Trägermaterial, Vernetzen der beiden Polymeren mit Polyisocyanat und Trocknen der Schicht, *dadurch gekennzeichnet,* daß das Bindemittelgemisch aus der Komponente 1, einem niedermolekularen OH-gruppenhaltigen Polyharnstoffurethan mit einer OH-Zahl zwischen 30 und 160 und einem Molekulargewicht (Zahlenmittel) zwischen 1 500 und 40 000, welches aus

1.IA 1 Mol eines Polydiols mit einem Molekulargewicht zwischen 400 und 4 000,
1.IB 0,2 bis 9 Mol eines Diols mit 2 bis 18 Kohlenstoffatomen,
1.IC 0,1 bis 4 Mol eines primären oder sekundären Aminoalkohols mit 2 bis 20 Kohlenstoffatomen,
1.ID 0,01 bis 1 Mol eines Triols mit 3 bis 18 Kohlenstoffatomen und
1.II 1,25 bis 13 Mol eines Diisocyanats mit 6 bis 30 Kohlenstoffatomen, wobei der Anteil der NCO-Gruppen des Diisocyanats, bezogen auf die Komponenten 1.IA bis 1.ID, 65 bis 95 % der äquivalenten Menge an OH- und NH-Gruppen beträgt,

hergestellt wird, mit der Maßgabe daß ein unpigmentierter mit Polyisocyanat vernetzter Film aus dieser Komponente 1 eine Reißfestigkeit (nach DIN 53 455) größer als 15 N/mm$^2$, eine Reißdehnung (nach DIN 53 455) größer als 50 %, einem E-Modul (nach DIN 53 457) größer als 150 N/mm$^2$ und eine Pendelhärte (nach DIN 53 157) von 30 bis 140 s aufweist, und der Komponente 2, einem physikalisch trocknendem Bindemittel besteht.

3. Magnetischer Aufzeichnungsträger gemäß 1 oder 2, *dadurch gekennzeichnet,* daß die Komponente 1.IB ganz oder teilweise durch Diamine mit 2 bis 15 Kohlenstoffatomen, durch Wasser oder durch primäre oder sekundäre Aminoalkohole mit 2 bis 20 Kohlenstoffatomen ersetzt wird.

4. Magnetischer Aufzeichnungsträger nach einem der Ansprüche 1 bis 3 *dadurch gekennzeichnet,* daß die Komponente 2 aus einem hochmolekularen, thermoplastischen, in Tetrahydrofuran löslichen *linearen* Polyurethan besteht, welches aus

2.A 1 Mol eines Polyesterols mit einem Molekulargewicht zwischen 400 und 4 000,
2.B 0,3 bis 15 Mol eines geradkettigen aliphatischen Diols mit 2 bis 10 Kohlenstoffatomen,
2.C 0 bis 1,5 Mol eines Triols mit 3 bis 10 Kohlenstoffatomen und 1,25 bis 17 Mol eines Diisocyanats mit 6 bis 30 Kohlenstoffatomen, wobei die Menge an NCO-Gruppen etwa äquivalent der Menge an OH-Gruppen der Summe der Komponenten 2.A bis 2.C ist,

hergestellt wird, mit der Maßgabe, daß ein unpigmentierter Film aus dieser Komponente 2 eine Reißfestigkeit (nach DIN 53 455) zwischen 40 und 95 N/mm$^2$ und eine Reißdehnung (nach DIN 53 455) von 100 bis 1 400 % aufweist, wobei das Mischungsverhältnis der Komponenten 1 und 2 9 : 1 bis 1 : 9 beträgt.

5. Magnetischer Aufzeichnungsträger nach einem der Ansprüche 1 bis 3 *dadurch gekennzeichnet,* daß die Komponente 2 aus einem Polyvinylformalbindemittel mit einem Vinylformalgruppen-Gehalt von mindestens 65 %, oder einem Copolymeren aus 50 - 95 Gew.% Vinylchlorid und 5 bis 50 Gew.% eines Mono- oder Diesters eines aliphatischen Diols mit 2 bis 4 Kohlenstoffatomen mit Acrylsäure oder Methacrylsäure, oder einem Phenoxyharz, dessen Konstitution der Formel

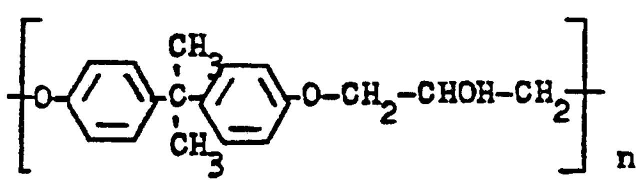

mit n annähernd gleich 100 entspricht, oder einem Di-und/oder Triester der Cellulose mit mindestens einer Carbonsäure mit 1 bis 4 Kohlenstoffatomen besteht, wobei das Mischungsverhältnis der Komponente 1 und 2 1 : 0,8 bis 1 : 0,1 beträgt.

## Claims

1. A magnetic recording medium which comprises a nonmagnetic base and a magnetic layer obtained by applying a dispersion of an anisotropic magnetic material in the solution of a mixture of two organic polymers and

additives in layer form to the base material, crosslinking the two polymers with polyisocyanate and drying the layer, wherein the binder mixture consists of Component 1, which is a low molecular weight OH-containing polyurea-urethane which has an OH number of from 30 to 160 and a number average molecular weight of from 1500 to 40,000 and is obtained from

1.IA 1 mole of a polydiol having a molecular weight of from 400 to 4,000
1.IB from 0.2 to 10 moles of a diol of 2 to 18 carbon atoms,
1.IC from 0.1 to 4 moles of a primary or secondary aminoalcohol of 2 to 20 carbon atoms and
1.II from 1.20 to 13 moles of a diisocyanate of 6 to 30 carbon atoms, the proportion of NCO groups in the diisocyanate being from 65 to 95 %, based on Components 1.IA to 1.IC, of the equivalent amount of OH and NH groups,

with the proviso that a non-pigmented film crosslinked with polyisocyanate and consisting of said component 1 has a tensile strength (according to DIN 53,455) greater than 15 $N/mm^2$, an elongation at break (according to DIN 53,455) greater than 50 %, a modulus of elasticity (according to DIN 53,457) greater than 150 $N/mm^2$ and a pendulum hardness (according to DIN 53,157) of from 30 to 140 sec, and Component 2, which is a physically drying binder.

2. A magnetic recording medium which comprises a nonmagnetic base and a magnetic layer obtained by applying a dispersion of an anisotropic magnetic material in the solution of a mixture of two organic polymers and additives in layer form to the base material, crosslinking the two polymers with polyisocyanate and drying the layer, wherein the binder mixture consists of Component 1, which is a low molecular weight OH-containing polyurea-urethane which has an OH number of from 30 to 160 and a number average molecular weight of from 1500 to 40,000 and is obtained from

1.IA 1 mole of a polydiol having a molecular weight of from 400 to 4,000,
1.IB from 0.2 to 9 moles of a diol of 2 to 18 carbon atoms,
1.IC from 0.1 to 4 moles of a primary or secondary aminoalcohol of 2 to 20 carbon atoms,
1.ID from 0.01 to 1 mole of a triol of 3 to 18 carbon atoms and
1.II from 1.25 to 13 moles of a diisocyanate of 6 to 30 carbon atoms, the proportion of NCO groups in the diisocyanate being from 65 to 95 %, based on Components 1.IA to 1.ID, of the equivalent amount of OH and NH groups,

with the proviso that a non-pigmented film crosslinked with polyisocyanate and consisting of said component 1 has a tensile strength (according to DIN 53,455) greater than 15 $N/mm^2$, an elongation at break (according to DIN 53,455) greater than 50 %, a modulus of elasticity (according to DIN 53,457) greater than 150 $N/mm^2$ and a pendulum hardness (according to DIN 53,157) of from 30 to 140 sec, and Component 2, which is a physically drying binder.

3. A magnetic recording medium as claimed in claim 1 or 2, wherein Component 1.IB is replaced wholly or partly by diamines of 2 to 15 carbon atoms, by water or by primary or secondary aminoalcohols of 2 to 20 carbon atoms.

4. A magnetic recording medium as claimed in claim 1 or 2, wherein Component 2 consists of a high molecular weight thermoplastic linear polyurethane which is soluble in tetrahydrofuran and is obtained from

2.A 1 mole of a polyesterol having a molecular weight of from 400 to 4,000,
2.B from 0.3 to 15 moles of a straight-chain aliphatic diol of 2 to 10 carbon atoms,
2.C from 0 to 1.5 moles of a triol of 3 to 10 carbon atoms and from 1.25 to 17 moles of a diisocyanate of 6 to 30 carbon atoms, the amount of NCO groups being about equivalent to the amount of OH groups in Components 2.A, 2.B and 2.C together,

with the proviso that a non-pigmented film consisting of said Component 2 has a tensile strength (according to DIN 53, 455) of from 40 to 95 $N/mm^2$ and an elongation at break (according to DIN 53,455) of from 100 to 1,400 %, and in which the ratio of component 1 to component 2 is from 9 : 1 to 1 : 9.

5. A magnetic recording medium as claimed in one of claims 1 to 3, wherein component 2 consists of a polyvinylformal binder containing not less than 65 % of vinylformal groups, or of a copolymer of 50 - 95 % by weight of vinyl chloride and 5 - 50 % by weight of a monoester or diester of an aliphatic diol of 2 to 4 carbon atoms with acrylic acid or methacrylic acid, or of a phenoxy resin of the formula

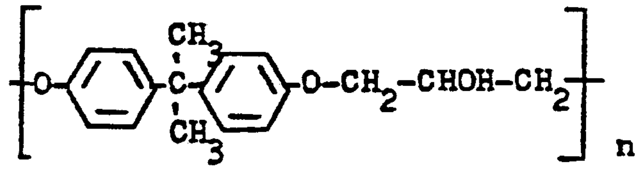

where n is about 100, or of a diester and/or triester of cellulose with one or more carboxylic acids of 1 to 4 carbon atoms, the ratio of component 1 to component 2 being from 1 : 0.8 to 1 : 0.1.

**Revendications**

1. Support d'enregistrement magnétique, constitue d'un matériau de support non magnétique et d'une couche magnétique, obtenu par application en couche, sur le matériau de support, d'une dispersion d'un matériau magnétique anisotrope dans la solution d'un mélange de deux polymères organiques et d'additifs, réticulation des deux polymères avec du polyisocyanate et séchage de la couche, caractérisé par le fait que le mélange de liant est constitué du composant 1, une polyuréeuréthane, à groupes OH de bas poids moléculaire, d'un indice OH compris entre 30 et 160 et d'un poids moléculaire (moyenne en nombres) compris entre 1 500 et 40 000, qui est préparé à partir de

1.IA 1 mole d'un polydiol d'un poids moléculaire compris entre 400 et 4 000,
1.IB 0,2 à 10 moles d'un diol ayant 2 à 18 atomes de carbone,
1.IC 0,1 à 4 moles d'un aminoalcool primaire ou secondaire ayant 2 à 20 atomes de carbone, et
1.II 1,20 à 13 moles d'un diisocyanate ayant 6 à 30 atomes de carbone, la proportion des groupes NCO du diisocyanate, rapportée aux composants 1.IA à 1.IC, étant de 65 à 95 % de la quantité équivalente de groupes OH et NH,

sous réserve qu'un film de ce composant 1 réticulé avec du polyisocyanate, non pigmenté, possède une résistance en traction (selon DIN 53 455) supérieure à 15 $N/mm^2$, un allongement en traction (selon DIN 53 455) supérieur à 50 %, un module E (selon DIN 53 457) supérieur à 150$N/mm^2$ et une dureté au pendule (selon DIN 53 157) de 30 à 140 s, et du composant 2, un liant séchant physiquement.

2. Support d'enregistrement magnétique, constitué d'un matériau de support non magnétique et d'une couche magnétique, obtenu par application en couche, sur le matériau de support, d'une dispersion d'un matériau magnétique anisotrope dans la solution d'un mélange des deux polymères organiques et d'additifs, réticulation de deux polymères avec du polyisocyanate et séchage de la couche, caractérisé par le fait que le mélange de liant est constitué du composant 1, une polyuréeuréthane, à groupes OH de bas poids moléculaire, d'un indice OH compris entre 30 et 160 et d'un poids moléculaire (moyenne en nombres) compris entre 1 500 et 40 000, qui est préparé à partir de

1.IA 1 mole d'un polydiol d'un poids moléculaire compris entre 400 et 4 000
1.IB 0,2 à 9 moles d'un diol ayant 2 à 18 atomes ce carbone,
1.IC 0,1 à4 moles d'un aminoalcool primaire ou secondaire ayant 2 à 20 atomes de carbones, et
1.ID 0,01 à 1 mole d'un triol ayant 3 à 18 atomes de carbone et
1.II 1,25 à 13 moles d'un diisocyanate ayant 6 à 30 atomes de carbone, la proportion des groupes NCO du diisocyanate, rapportée aux composants 1.IA à 1.ID, étant de 65 à 95 % de la quantité équivalente de groupes OH et NH,

sous réserve qu'un film de ce composant I réticulé avec du polyisocyanate, non pigmenté, possède une résistance en traction (selon DIN 53 455) supérieure à 15 $N/mm^2$, un allongement en traction (selon DIN 53 455) supérieur à 50 %, un module E selon DIN 53 457) supérieur à 150 $N/mm^2$ et une dureté au pendule (selon DIN 53 157) de 30 à 140 s, et du composant 2, un liant séchant physiquement.

3. Support d'enregistrement magnétique selon 1 à 2 caractérisé par le fait que le composant 1.IB est remplacé totalement ou partiellement par de la diamine ayant 2 à 15 atomes de carbone, par de l'eau ou par de l'aminoalcool ayant 2 à 20 atomes de carbone.

4. Support d'enregistrement magnétique selon l'une des revendications 1 à 3 caractérisé par le fait que le composant 2 est constitué par un polyuréthane de poids moléculaire élevé, thermoplastique, linéaire, soluble dans le tétrahydrofurane, qui est préparé à partir de

2.A 1 mole d'un polyestérol d'un poids moléculaire compris entre 400 et 4 000
2.B 0,3 à 15 moles d'un diol aliphatique, à chaîne droite, ayant 2 à 10 atomes de carbone,
2.C 0 à 1,5 mole d'un triol ayant 3 à 10 atomes de carbone et

1,24 à 17 moles d'un diisocyanate ayant 6 à 30 atomes de carbone, la quantité de groupes NCO étant à peu près équivalente à la quantité de groupes OH de la somme des composants 2.A à 2.C, sous réserve que ce composant 2 possède une résistance en traction (selon DIN 53 455) comprise entre 40 et 95 $N/mm^2$ et un allongement en traction (selon DIN 53 455) compris entre 100 et 1 400 %, le rapport de mélange des composants 1 et 2 étant de 9/1 à 1/9.

5. Support d'enregistrement magnétique selon 'une des revendications 1 à 3, caractérisé par le fait que le composant 2 est constitué par un liant polyvinylformal d'une teneur en groupes vinylformal d'au moins 65 %, ou

- un copolymère de 50 à 95 % en poids de chlorure de vinyle et 5 à 50 % en poids d'un mono- ou diester d'un diol aliphatique ayant 2 à 4 atomes de carbone avec de l'acide acrylique ou acide méthacrylique, ou

- une résine phénoxy, dont la composition correspond à la formule

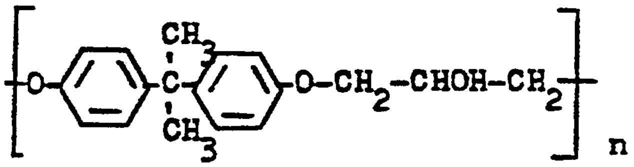

avec n égal approximativement à 100,

- ou un di et/ou triester de cellulose avec au moins un acide carboxylique de 1 à 4 atomes de carbone,

le rapport de mélange des composants 1 et 2 étant de 1/0,8 à 1/0,1